# EUROPEAN PATENT APPLICATION

(11) **EP 2 042 994 A2**
(43) Date of publication of application: **01.04.2009**
(21) Application number: 08252800.1
(22) Date of filing: 22.08.2008
(51) Int. Cl.: G06F 11/34

(54) **Profile engine system and method**

(30) Priority: 22.08.2007 US 894933
(71) Applicant: Fortent Americas, Inc., New York, NY 10016 (US)
(72) Inventor: McLaren, Iain Douglas, Pittstone, Bucks LU7 9AY (GB); Wicks, Antony James, London SE26 4NT (GB); Mangat, Annop Singh, New York, New York 10010 (US)
(74) Representative: Small, Gary James

(57) **Abstract**

A system for profile record generation of input records, the system comprising: a record processor which converts the input records into a data records suitable for the profile record generation; and a statistics engine for the generation of profile records based on the data records. Furthermore, system optimization can be obtained by use of a task control method that sub-divides the aggregations of profile records into units of work that can be individually performed, the method comprising: partitioning based on a pre-determined partitioning key associated with entities to be profiled, wherein the association between the partitioning key and the entities being profiled is varied in order to optimize the profiling performance.

## Description

### BACKGROUND

### 1. Field of the Invention

The present disclosure relates to a system and method for the automatic generation of statistical characterizations of data. More particularly, the disclosure relates to a technique for the efficient processing of transactional and reference data in order to derive statistical characterizations of that data.

In particular, the present disclosure relates to a system and method for the automatic generation of statistical characterizations of data. More particularly, the disclosure relates to a technique for the efficient processing of transactional and reference data in order to derive statistical characterizations of that data. This disclosure generally pertains to a system for profile record generation of input records. In particular, the system comprising: a record processor which converts the input records into a data records suitable for the profile record generation; and a statistics engine for the generation of profile records based on the data records. Furthermore, system optimization can be obtained by use of a task control method that sub-divides the aggregations to be performed to create the profile records into units of work that can be individually performed, the method comprising: partitioning based on a pre-determined partitioning key associated with entities to be profiled, wherein the association between the partitioning key and the entities being profiled is varied in order to optimize the profiling performance.

Such data characterizations are a requirement for many business tasks where an understanding of business activity is required. In particular the disclosure can be applied for the understanding of data associated with regulatory risk and compliance, for purposes associated with the detection of money laundering and fraud and for other applications, such as Customer Relationship Management or event based marketing. The disclosure is suited to any environment where data characterization of large scale data sets is required.

### 2. Description of the Related Art

In many business applications there is a need to understand the characteristic behaviors or patterns associated with transactions. This is made more complex as the transaction volumes of modem business environments are high and the transactional patterns of interest can be complex. There is therefore a general requirement for an efficient systematic approach to the characterization of transactional behaviors for business entities and groups of business entities over different features of the transactions. Where these different features represent characteristics associated with the transactions such as the entities involved, transactional characteristics and time periods.

In general, statistical methods and statistical characterizations are applied to features of the transactional data in order to provide data understanding. Statistical methods will usually consider aggregations and transformations of the data based on specific features or fields in the transactional data. For many applications it is important that such methods are applied quickly and efficiently. The increasing availability of fast computing resource means that such methods need to be able to make use of multi-processor, multi-core and distributed processing environments and that the available processing power in such environments is used efficiently and optimally.

Existing methods for generating profiles for business entities have the disadvantage that they either do not subdivide the problem and hence build all profiles for all entities in a single step or, alternatively, they subdivide the problem such that profiles are built for each entity at a time. The processing approach in either of these cases is non-optimal. Furthermore, existing methods do not consider characteristics of the data being profiled in order to increase system efficiency.

This disclosure considers methods to create subdivisions associated with groups of entities that allow all entities within such a subdivision to be processed simultaneously. Further the present disclosure considers methods to control and optimize the allocation of the subdivisions and the execution of these subdivisions. Further the present disclosure considers the use of the generated profiles to allow the subdivision process to be enhanced in order for the processing to be made more efficient.

### SUMMARY

A system for profile record generation of input records, the system comprising: a record processor which converts the input records into a data records suitable for the profile record generation; and a statistics engine for the generation of profile records based on the data records. The system further comprises a task engine that prioritizes and/or processes tasks. The record processor pre-sorts and subdivides groups of the input records.

Preferably, the data records each comprise at least one data field group selected from the group consisting of: data record feature field group, data record value field group and data record reference field group. Some particular types of processing fields that are in the feature field group may also be considered to be in the value field group, or vice-versa.

The data record feature field group comprises data fields that describe a particular feature of the data record. The data fields of the data record feature field group are at least one field selected from the group consisting of: a value representing a finite time, entity, additional characteristics associated with the input record, and other possible characteristics that may be present and transformed from the input record. The data record feature field group is used by the statistics engine to identify and select features for the aggregate profile record generation.

The system data record value field group comprises data fields that describe the values associated with the data record feature field group.

The statistics engine generates statistics for the data record value field group across a plurality of the data records during the profile record generation.

The data record reference field group comprises data fields that are copies or transformed from the input record and which are to be stored for reference purposes or for other non-profile record generation tasks.

The data fields of the data record reference field group are at least one selected from the group consisting of: narrative (for instance, the transaction narrative), Field1 (a first additional reference field) and Field2 (a second additional reference field).

The profile record is produced by the statistics engine based on aggregation or other statistical processing of the data record value fields for a particular data record feature fields present in a plurality of the data records. Each the profile record comprises a profile record feature field group and a profile record statistics field group. The profile record feature field group corresponds to a particular field, or number of fields, present in the data record feature field group that are considered by the statistics engine during profile generation. The combination of fields in the profile record feature field group defines the characteristic of the profile, wherein the combination of fields from the profile record feature field group defines which the data records are processed by the statistics engine in order to generate the profile record.

The statistics field group provides derived aggregate statistics for the profile record feature field group, i.e. of the value field group associated with the profile record feature field group. The statistics field group is created by the statistics engine through the aggregation or other mathematical manipulation of the data records identified by a particular profile record feature field group.

The profile record feature field group includes at least one field selected from the group consisting of: a value representing a finite time, entity, additional characteristics associated with the data record, and other possible characteristics that may be present and transformed from the data record.

The profile record statistics field group includes at least one field selected from the group consisting of: number of the data records considered in the aggregation, the maximum values located as part of the aggregation, the minimum values located as part of the aggregation, the total sum of values located as part of the aggregation, the sum of values squared

The tasks are a unit of work to be performed by the system. The work is creation of one or more the data records, and/or creation of one or more the profile records. The task engine includes at least one task queue. The task queue comprises at least one field selected from the group consisting of: task field, a descriptor field, a priority field and a status field. The tasks are ordered in the task queue based on the priority assigned to the task and selected for execution based on the status and an execution order assigned to the task.

The system further comprises a field mapper which creates normalized data representations during the processing of the input records by the record processor. The field mapper performs at least one transformation selected from the group consisting of: entity substitution, reference lookup, regular expression matching, field concatenation, hash functions, phonetic encoding, format conversions, temporal substitutions, deterministic methods, substring matching and field lookup methods.

The system further comprises a controller that creates a task for each combination of the profile record feature field group to be profiled.

The system further comprises a controller that creates a single task to profile all of the profile record feature field groups to be profiled.

The system further comprises a controller that creates a number of tasks that each consider a number of the profile record feature field groups to be profiled.

The controller selects and groups the profile record features for profiling via the use of partition keys, wherein the association of the partition keys to entities or the data record feature field group to be profiled can be adjusted by the system and will change the amount of work to be performed in each the task and the speed of operation of each the task, whereby the performance of the system is enhanced.

The controller performs the association of the partition keys based on a deterministic calculation against the entity or data record feature field group being mapped.

The controller performs the association of the partition keys based on creating equal numbers of data record feature field groups or entities for each partition key.

The controller performs the association of the partition keys based on recorded measures of previous tasks and operational performance of the system.

The controller adjusts the absolute number of the partition keys in order to improve performance of the system.

A method generating profile records from input records, the method comprising: converting the input records into a data records suitable for the profile record generation; and generating the profile records based on the data records.

Preferably, the method further comprises prioritizing and/or processing of tasks. Preferably the data records each comprise at least one data field group selected from the group consisting of: data record feature field group, data record value field group and data record reference field group. More preferably, the data record feature field group comprises data fields that describe a particular feature of said data record. More preferably, the data fields of the data record feature field group are at least one field selected from the group consisting of: a value representing a finite time, entity, additional characteristics associated with said input record, and other possible characteristics that may be present and transformed from the input record.

Preferably the data record feature field group identifies and selects features for the aggregate profile record generation. Preferably, the data record value field group comprises data fields that describe the values associated with the data record feature field group. Preferably, the step of generating said profile records generates statistics for the data record value field group across a plurality of the data records during the profile record generation. Preferably, the data record reference field group comprises data fields that are copies or transformed from the input record and which are to be stored for reference purposes or for other non-profile record generation tasks. More preferably, the data fields of the data record reference field group are at least one selected from the group consisting of: narrative.

Preferably, the profile record is produced by aggregation or other statistical processing of the data record value fields for a particular data record feature fields present in a plurality of the data records. More preferably, each profile record comprises a profile record feature field group and a profile record statistics field group.

Preferably, the profile record feature field group corresponds to a particular field present in the data record feature field group that are considered by the statistics engine during profile generation.

Preferably, the combination of fields in the profile record feature field group defines the characteristic of the profile, wherein the combination of fields from the profile record feature field group defines which data records are processed by the statistics engine in order to generate the profile record.

Preferably, the statistics field group provides derived aggregate statistics for the profile record feature field group.

Preferably, the statistics field group is created by the statistics engine through the aggregation or other mathematical manipulation of the data records identified by a particular profile record feature field group.

Preferably, the profile record feature field group includes at least one field selected from the group consisting of: a value representing a finite time, entity, additional characteristics associated with said data record, and other possible characteristics that may be present and transformed from the data record.

Preferably, the profile record statistics field group includes at least one field selected from the group consisting of: number of the data records considered in the aggregation, the maximum values located as part of the aggregation, the minimum values located as part of the aggregation, the total sum of values located as part of the aggregation, the sum of values squared.

Preferably, the tasks are a unit of work to be performed. Preferably the work is creation of one or more data records, and/or creation of one or more profile records. Preferably the tasks are organized via at least one task queue. More preferably the task queue comprises at least one field selected from the group consisting of: task field, a descriptor field, a priority field and a status field. Preferably the tasks are ordered in the task queue based on the priority assigned to the task and selected for execution based on the status and an execution order assigned to the task.

Preferably the method further comprises the step of creating normalized data representations during the converting of the input records into a data records. Preferably, the step of creating normalized data representation involves performing at least one transformation selected from the group consisting of: entity substitution, reference lookup, regular expression matching, field concatenation, hash functions, phonetic encoding, format conversions, temporal substitutions, deterministic methods, substring matching and field lookup methods.

Preferably the method further comprises a step of creating a task for each combination of the profile record feature field group to be profiled.

Preferably, the method further comprises a step of creating a single task to profile all of the profile record feature field groups to be profiled.

Preferably, the method further comprises a step of creating a number of tasks that each consider a number of the profile record feature field groups to be profiled.

Preferably, the step of creating selects and groups the profile record features for profiling via the use of partition keys, wherein the association of the partition keys to entities or the data record feature field group to be profiled will change the amount of work to be performed in each task and the speed of operation of each task, whereby the performance of the system is enhanced. Preferably, the step of creating performs the association of the partition keys based on a deterministic calculation against the entity or data record feature field group being mapped. Preferably, the step of creating performs the association of the partition keys based on creating equal numbers of data record feature field groups or entities for each partition key. Alternatively, the step of creating performs the association of the partition keys based on recorded measures of previous tasks and operational performance of system. The step of creating may adjust the absolute number of the partition keys in order to improve performance of the system.

A task control method that sub-divides the aggregations of profile records into units of work that can be individually performed, the method comprising: partitioning based on a pre-determined partitioning key associated with entities to be profiled, wherein the association between the partitioning key and the entities being profiled is varied in order to optimize the profiling performance.

The method wherein the variation of the association between the entities being profiled and the partitioning key is controlled based on previously calculated aggregate profile statistics.

The method wherein the variation of the association between the entities being profiled and the partitioning key is controlled based on known runtime performance.

The method wherein the variation of the association between the entities being profiled and the partitioning key is controlled based on a combination of runtime performance and the on previously calculated aggregate profile statistics.

### BRIEF DESCRIPTION OF THE DRAWINGS

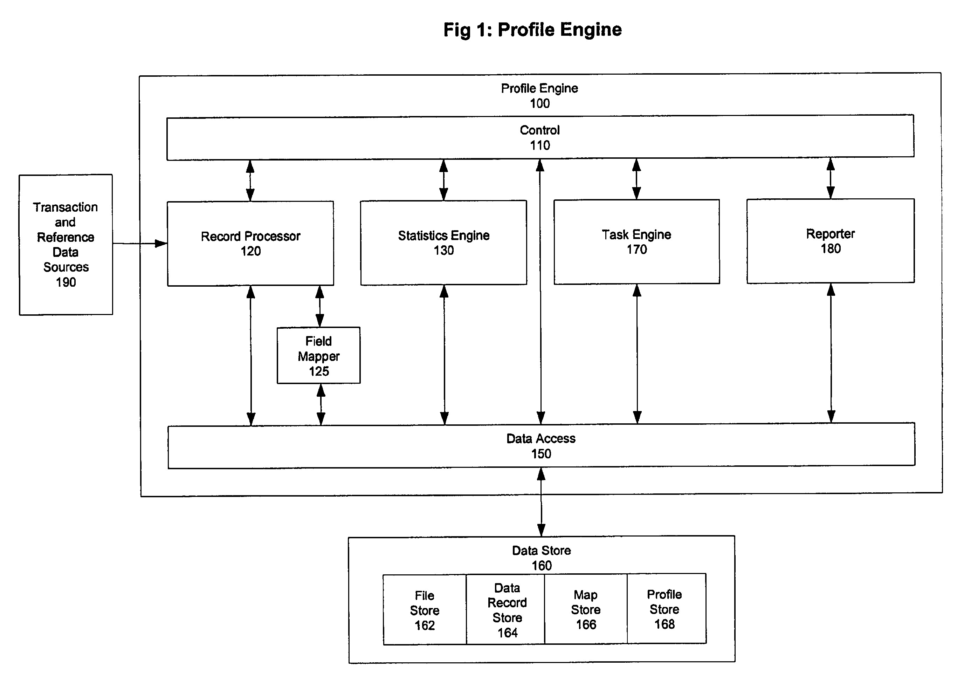

FIG. 1 is a block diagram of an implementation of the present disclosure.

FIG. 2 is a block diagram showing a sample input record.

FIG. 3 is a block diagram showing a sample data record.

FIG. 4 is a block diagram showing a sample profile record.

FIG. 5 is a flowchart of a method for the generation of one or more data records from an input record.

FIG. 6 is a flowchart of a method for the generation of one or more profile records from data records.

FIG. 7 is a diagram showing the association of partition keys to entities.

FIG. 8 is a representation of a task queue used for the process of distributed task execution, task control, task failure, and task recovery management.

FIG. 9 is a block diagram showing sample data records.

FIG. 10 is a block diagram showing sample profile records derived from the data records shown in FIG 9.

FIG. 11. is a flowchart of a method for the assignment of partition keys to entities being profiled.

FIG. 12 is a diagram showing the association of particular entities to particular partition keys.

FIG. 13 is a diagram showing the association of particular entities to particular partition keys following optimization of this mapping by the system.

### DESCRIPTION OF THE DISCLOSURE

XFIG. 1 is a block diagram of a profile engine 100 for the generation of statistical profile characterizations of transactional or other data. Profile Engine 100 receives input records from Transaction and Reference Data Sources 190, processes the input records to create data records, stores the data records in Data Store 160 and generates statistical profiles from these records and stores the results in Data Store 160. In order to perform computation efficiently and effectively, especially in multi-processor, multi-core or multi-threaded environments, Profile Engine 100 performs calculations using a task based architecture that sub-divides the work to be performed at each processing step. Profile Engine 100 also performs optimizations to the composition and allocation of tasks in order to improve performance.

Profile Engine 100 comprises a number of functional units.

Control 110 performs sequencing, scheduling, optimization and control functions associated with the other operational units. Control functions and the sequence of operations to be performed are defined by meta-data stored in Data Store 160.

Record Processor 120 is responsible for the transformation of input records into data records which are stored for later processing into profile records. Input records are received from Transaction and Reference Data Sources 190 and once transformed are passed to Data Access 150 for storage in Data Store 160, more specifically in Data Record Store 164. Input records can be supplied to Record Processor 120 singularly or in batches. Input records may be contained in files or delivered using standard computing technologies such as across message queues or through web service calls.

Field Mapper 125 maps external representations of data to internal forms that are more suitable for processing and is used by Record Processor 120 for this purpose. Field Mapper 125 can also perform the reverse of these transformations in order to retrieve the external representation of data from the internal forms, where this is possible. Field Mapper passes mapped results to Data Access 150 for storage in Data Store 160. Field Mapper may also make requests to Data Access 150 to interrogate and retrieve data from Data Store 160. The operation of the Field Mapper 125 is explained in more detail below.

Statistics Engine 130 performs the necessary mathematical, statistical and aggregate functions required for profile generation. Statistics Engine 130 generates profile records for features, or groups of features, associated with data records. More specifically, for a particular feature or group of features Statistics Engine 130 makes requests to Data Access 150 to retrieve data records from Data Store 160 and performs statistical methods on the retrieved data records in order to generate profile records. Each profile record generated in this way provides a statistical characterization of a particular feature. Profile records created by Statistics Engine 130 are passed to Data Access 150 for storage in Data Store 160. Previously created profile records may be reprocessed at a later stage by the Statistics Engine 130 in order to derive further profiles.

Data Access 150 provides the necessary functions for the control of data access and data storage. Data Access 150 allows efficient access and storage of data for the other operational units.

Data Store 160 represents a standard method of data storage. Storage is typically associated with one or more databases, database schemas and/or file based storage methods.

File Store 162 provides storage for configuration data used to define the operational functions of Profile engine 100 and is also used by the other processing elements.

Data Record Store 164 provides storage for data records generated by Profile engine 100.

Map Store 166 provides storage for data mappings performed by Field Mapper 125 and generated by Profile engine 100.

Profile Store 168 provides storage for profile records generated by Profile engine 100 through the statistical aggregation of data records.

Task Engine 170 is responsible for the control of individual tasks associated with each item of work to be conducted by Profile engine 100. Task engine allows the performance of Profile engine 100 to be optimized in order to speed calculation of results. Task Engine 170 provides a task based control architecture that sub-divides function into units of work that can be individually performed with task control, task failure and task recovery management. The sub-division of units of work is optimized and controlled by Control 110 in order to improve the performance of Profile engine 100 and to maximize task throughput.

Reporter 180 is responsible for logging, error, exception and other reporting that is necessary as part of operation of Profile engine 100. Reports and logs generated by Reporter 180 are passed to Data Access 150 for storage in Data Store 160.

Transaction and Reference Data Sources 190 represents the source of input records for processing by Profile engine 100. Input records may be delivered singularly or in batches. Delivery may be achieved through push delivery or pull delivery methods.

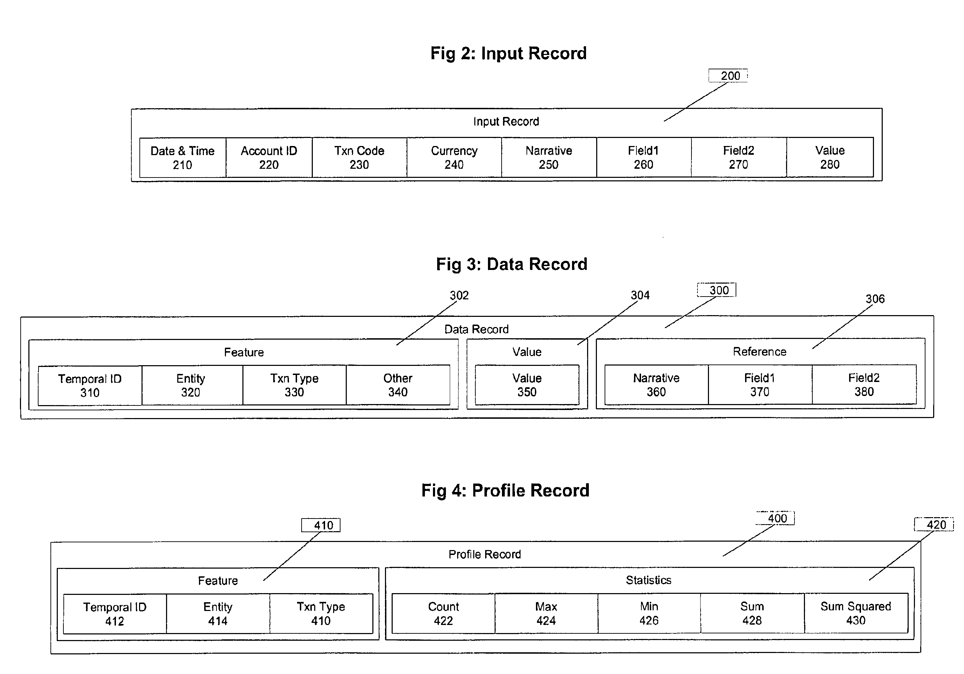

FIG. 2 is an illustration of an input record 200 as would be delivered or received by Profile engine 100 from Transaction and Reference Data Sources 190.

Input records can take many different forms and may be monetary or non-monetary transactions or represent reference data. Example monetary transactions would be those associated with financial transactions, for example banking transactions, credit card, debit card or correspondent transactions, or those associated with security and stock exchanges such as stock trades and settlements. Example non-monetary transactions would be those that are recorded when client, customer or account actions are performed, for example balance inquiries associated with an account, the change of address for a customer or the record of access to account details, for instance those associated with internet access to an account. Example reference data would be details associated with a customer, client or account. For instance details of a customer's address, the name of the customer or cross-reference information required to associate a customer with an account.

XFig. 2 provides an example of an input record 200 which, in this example, represents a monetary transaction. This example input record 200 comprises a number of fields that represent the Date & Time 210 of the transaction, the Account ID 220 (the account number, bank routing number or other details that identify the payer associated with the transaction), a Txn Code 230 (defining details associated with the type of transaction, for instance a credit or debit, a cash based transaction, and/or the channel by which it was performed, for instance at a bank branch or at an ATM), a Currency 240 field (detailing the transaction currency), a Narrative 250 field (a description of the transaction), Field1 260 and Field2 270 (other supporting or reference fields) and a Value 280 field (the value transacted).

Transaction and Reference Data Sources 190 will usually comprise large numbers, or streams, of input records for processing. When operating with batches of data Record Processor 120 may pre-sort and sub-divide groups of input records in order that processing can be performed more efficiently.

FIG. 3 is an illustration of a data record 300 as produced by Record Processor 120 as a result of processing an input record 200. The data record 300 is generated in a form suitable for further processing by Statistics Engine 130 for the generation of profile records.

The data record 300 comprises data fields that are either copies of information or as a result of transformation of fields in the input record 200. More specifically data record 300 comprises Feature 302, Value 304 and Reference 306 field groups. Each field group may comprise one or more data fields and depending on purpose there may be one or more sets of Feature 302, Value 304 and Reference 306 field groups in a single data record 300.

Feature field group 302 comprises data fields that describe a particular feature of the data record. Feature field group 302 or sub fields in this group are used by Statistics Engine 130 to identify and select features for profile record generation. Value field group 304 comprises data fields that describe the values associated with a Feature 302. Statistics Engine 130 generates statistics for Value field group 304 across multiple data records during profile record generation. Reference field group 306 comprises data fields that are copied or transformed from the originating input record and are to be stored for reference purposes or for other non-profile record generation tasks.

In FIG. 3, the Feature field group 302 comprises four data fields: Temporal ID 310, Entity 320, Txn Type 330 and Other 340. These are example characteristics that may be used to identify a data record and may, either as a whole or as a subset, be used to identify data records for processing by Statistics Engine 130 during profile record generation. Data fields associated with the Feature field group 302 are normalized data forms, for instance integer value representations, which are amenable to data manipulation. Such representations are used to restrict the types of data to be stored and to be used by Statistics Engine 130. This allows more uniform processing of data to be performed and has other performance benefits. The normalized data representations are created by Field Mapper 125 during the processing of input records by Record Processor 120.

In the example in FIG. 3, Temporal ID 310 is a transformation of the Date & Time 210 from the input record 200 to a value representing a finite time from a defined reference. Temporal ID 310 may represent a time in seconds, minutes or hours, the day, the day of the week, a date or time range or any other period. Temporal ID 310 may also be a reference associated with a particular batch of transactions loaded into the system at a particular time. Entity 320, in this example, is derived from the Account ID 220 from the input record 200. Txn Type 330 defines an additional characteristic associated with the data record and in this example is derived from the Txn Code 230 and the Currency 250 associated with the input record 200. Other 340 represents some other possible characteristics that may be present and transformed from the input record. It will be recognized that the Feature 302 field group will be dependent on the particular business problem and the type of processing being performed by Profile engine 100.

Value field group 304, in this example, comprises a single field Value 350 which is derived from Value 280 in Input Record 200. In other instances there may be one or more values derived from the originating input record. Record Processor may perform manipulation and other aggregation across input value fields in order to generate Value field group 304.

Reference field group 306, in this example, comprises Narrative 360, Field1 370 and Field2 380 data fields derived respectively from the Narrative 260, Field1 270 and Field2 280 data fields of the input record 200.

Data records once generated by Record Processor 120 are passed to Data Access 150 for storage in Data Store 160, more specifically in Data Record Store 164. Depending on the configuration of Profile engine 100 a single input record may result in one or more Data Records being generated by Record Processor 120.

FIG. 4 is an illustration of a profile record 400 as produced by Statistics Engine 130. One or more profile records 400 will be created by Statistics Engine 130 based on aggregation or other statistical processing of Value 350 fields for particular Feature 302 fields present in multiple data records.

Profile Record 400 comprises a Feature 410 and Statistics 420 field groups. The Feature field group 410 identifies a particular feature represented by Profile Record 400. Feature field group 410 corresponds to a particular field present in Feature 302 of data records that are considered by Statistics Engine 130 during profile generation. The combination of fields in Feature field group 410 define the characteristic of the profile and therefore it is this combination that defines which data records are processed by Statistics Engine 130 in order to generate a particular profile record. Statistics field group 420 provides derived aggregate statistics for the Feature field group 410. Statistics field group 420 is created by Statistics Engine 130 through the aggregation or other mathematical manipulation of data records identified by the particular Feature 410.

In the example in FIG. 4 the Statistics field group 420 provides a Count 422 (number or Data Records considered in the aggregation), Max 424, Min 426 (the maximum and minimum values located as part of the aggregation), Sum 428 (the total sum of values), and Sum Squared 450 (the sum of values squared). It will be recognized that the combination presented allows the average, standard deviation, variance and root mean square of the profile to also be easily derived. Depending on the profile to be performed and the purpose of the profiling other data fields may be generated. For example, a profile record may provide a histogram of characteristics of data records for a particular feature. Any other mathematical transformation of collections of data records identified by a feature is possible. It will be recognized that the elements defined in 420 have the benefit that they can be easily used for further calculation and reaggregation. Profile records may be constructed in this way to allow further reaggregation in order to more easily generate further profile record aggregates over a reduced number of features. This minimizes the need, where possible, to consider the original data records for the generation of secondary profile records and is therefore more efficient. Secondary profiles of this type can be produced wherever the feature considered by the profile is a reduction or reformulation of the fields present in the feature of the originating profile records. Since profile records have feature 410 and value, or statistics 420, field groups and these are equivalent to feature 302 and value 304 field groups of the data record 300, profiles may themselves be processed by Statistics Engine 130 in order to create further profile records.

The generation of profile records comprises two primary stages: the creation and storage of data records and the creation and storage of profile records. This process is controlled by Control 110.

Control 110 schedules and defines the work to be performed and is responsible for sub-division of the work into tasks. Tasks are prioritized and processed by Task Engine 170. Tasks define a unit of work to be performed by Profile engine 100. A task may be associated with the creation of one or more data records, or the creation of one or more profile records. Tasks may also be created for other types of computational function. In a multi-processor, multi-core or multi-threaded environment the sub-division of work into tasks allows them to be distributed to take advantage of the processing capabilities. The sub-division of work into tasks also allows better control of the performance of Profile engine 100 and also allows task status, task failure and task recovery management where there is the possibility of errors during processing. Task Engine 170 controls the processing and prioritization of tasks through use of a Task Queue 800.

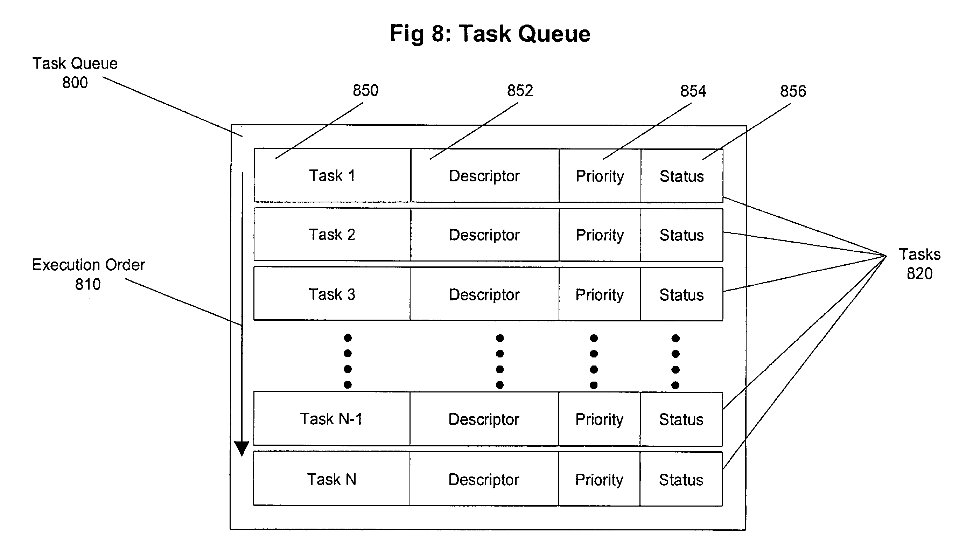

FIG. 8 is a block diagram of Task Queue 800 that is used by Task Engine 170. Task Engine 170 may use multiple instances of Task Queue 800 where this is necessary, for instance to control the work of the Record Processor 120 separately from the work of the Statistics Engine 130, or for controlling different input sources or profile streams associated with each. Alternatively different types of task, for instance input record processing tasks and profile tasks, may appear in the same Task Queue 800.

Each Task 820 in the Task Queue 800 has an associated Task ID 850, a Descriptor 852, a Priority 854 and a Status 856. Task ID 850 provides a unique reference identity for the task. Descriptor 852 defines the work to be performed by the task. Priority 854 defines the order of processing to be performed; such ordering may consider the dependency of particular tasks. Status 856 defines the status of the task in terms of whether it is eligible to be performed, in operation, completed, or failed, in which case the status indicates the reason for failure.

Tasks 820 are ordered in Task Queue 800 based on Priority 854 and selected for execution based on Status 856 and Execution Order 810. The status of each Task 820 is updated as Tasks 820 are executed. This process is controlled by Task Engine 170 and such changes are logged to Reporter 180. A Task 820 that is eligible for processing will be selected and passed dependent on its Descriptor 852 to either Record Processor 120 or Statistics Engine 130 for processing. Once a task 820 is completed, it is removed from Task Queue 800. Tasks that have failed may be considered for re-processing once Control 110 has corrected any error conditions. The number of tasks being executed simultaneously is controlled, changed and optimized by Control 110. The next task selected for execution will always be the first task at the top of Task Queue 800 that is eligible for processing. This allows multiple tasks to be selected and processed simultaneously.

Having identified the work to be performed Control 110 passes tasks to be performed to Task Engine 170. The process of executing multiple tasks is then distributed across multiple processors or processor threads of execution. Each thread of execution is allocated a task from Task Queue 800, executes the task and then takes the next task in the queue for execution. The process repeats until no more tasks are available in Task Queue 800 and the processing is complete.

In general Task Engine 170 will process fewer tasks simultaneously than there are jobs available in the Task Queue 800 to be executed. The processing capacity of the computing environment will limit the number of tasks that can be executed simultaneously at any one time. The number of tasks that are executed simultaneously is an additional factor that can be adjusted by Control 110 in order to optimize system performance.

Considering firstly the processing of input records in order to create data records. When input records are received by Profile engine 100, Control 110 creates one or more tasks to process the input records. Tasks may process the input records singularly, in batches of input records or a single task may be created to process all input records.

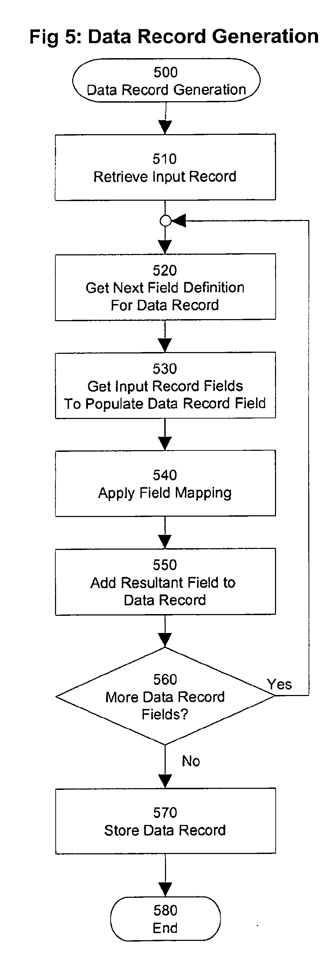

FIG. 5 is a flowchart of a method 500 for creating data record 300 from input record 200. FIG.5 illustrates the process of data record 300 generation for a single input record. Such a method would be executed for a task associated with the processing of a single input record. More generally the same approach can be applied to tasks processing batches of input records. Method 500 describes the steps performed by Record Processor 120. Method 500 starts by entering step 510.

In step 510, Profile Engine 100 retrieves the input record from Transaction and Reference Data Sources 190 and dependent on the task being performed retrieves configuration meta-data information associated with the transformation to be performed for a particular input record from Data Store 160. The configuration meta-data defines the logic that must be performed against each field of the input record in order to create the data record. The meta-data defines the function of the record processor 120 for different forms of input record that may be processed by the system. The meta-data defines the data record output format required for a particular input record. The meta-data describes the data record and input record field orderings, the fields to be transformed and the type of transformation to be performed. This meta-data is stored in Data Store 160, more specifically File Store 162. From step 510, method 500 advances to step 520.

In step 520, the meta data definition for the first field in the output data record is retrieved. From step 520 method 500 advances to step 530.

In step 530, the appropriate fields in the input record are selected. From step 530 method 500 advances to step 540.

In step 540, fields in the input record are decoded by the record processor and fields or groups of fields are passed to Field Mapper 125 for transformation. This process can be performed sequentially for all fields requiring transformation or may also be done in parallel for sake of efficiency where it is appropriate to do so. Appropriate field mappings are applied to the input record data in order to create the resultant data record field. Field Mapper 125 is responsible for applying transformations and mappings against the input record. A fuller functional description of the types of transformation applied by Field Mapper 125 is defined below. From step 540 method 500 advances to step 550.

In step 550 the resultant data field generated as part of the mapping process is added to the output data record. From step 550 method 500 advances to step 560.

In step 560 a test is performed to understand if more output data record fields need to be generated. If there are more data record fields to be generated method 500 moves from step 560 to step 520. If there are no more data record fields to be generated then method 500 advances from step 560 to step 570.

In step 570, the data record is passed by the record processor 120 to Data Access 150 in order to be stored in Data Store 160, more specifically in Data Record Store 164. From step 570 method 500 advances to step 580.

In step 835, method 800 ends.

Numerous optimizations of method 500 can be performed by Record Processor 120, including the creation of multiple dependent output fields in a single pass, or by changing the processing order of fields to maximize performance. Record Processor 120 can operate on a record by record basis or may process blocks of records associated with tasks. Where blocks of records are processed Record Processor 120 can perform field by field transformations across multiple records, rather than working on a single record at a time. Record Processor 120 may also chose to cache known results of data transformations in order to improve performance.

Record Processor 120 makes calls to Field Mapper 125 in order to perform field transformations. For each field, or group of fields, passed to it, Field Mapper 125 performs data substitution based on a meta-data definition.

Field Mapper 125 uses a variety of field substitution and extraction methods. These methods are used to transform fields into formats more suitable for profile generation. They can also be used to supplement data into the input records that would not otherwise be available and to correct sources of input data errors. More than one of these methods can be applied and the order of the mapping processes can be varied dependent on the task. Many of the methods applied by the field mapper are common to those found in ETL (Extract Transform Load) processes associated with data warehousing.

Field Mapper 125 performs at least the following transformations: entity (or surrogate key) substitution, reference lookup, regular expression matching, field concatenation, hash functions, phonetic encoding, format conversions, temporal substitutions, deterministic methods, substring matching, and field lookup methods. These are described below.

Entity substitution methods are those where a particular input field, or group of input fields are substituted with a unique ID based on a deterministic mapping. The input fields can take any variety of string, numeric or date forms. A simple example of usage would be for a single input field a value of 'A' would be mapped to '1', a value 'B' to '2', 'C' to '3'. When a new unseen value is presented (e.g. 'X') it will be assigned the next available unique value (e.g. '4'). Any occurrence of the field 'A' in different Input Records would always map to '1'. See for example:
http://en.wikipedia.org/wiki/Surrogate key. Such methods can be achieved, for example, through a mapping table held in Map Store 166. Each field is mapped to a unique entity held in a table and new keys are generated on an incremental or other basis as required.

Reference lookup methods are where reference or table based lookups are performed for particular input fields. Where this can be used to substitute input fields with those of a pre-determined form. Such methods can be used for dimensionality reduction of input data. Input fields where no definition exists in the lookup table can cause exception reports to be generated or can be provided with a 'default' value.

Regular expression matching is where mapping is performed with regular expressions and wild card matching methods where particular character sequences are to be identifies and extracted from input fields. Such methods are particularly suitable for dimensionality reduction of input data.

Concatenation of field transformations are those where two or more input fields are concatenated and the order of concatenation is controlled by a meta-data definition.

Hash functions are those where deterministic methods such as hash or mapping functions are used to transform input fields. These methods may not necessarily guarantee uniqueness, i.e. two different input fields may 'hash' to the same value. Hashing of this type may be non-reversible, in that the input field cannot be recovered from the mapped field.

Phonetic encoding methods are those where strings are mapped according to the way that they are pronounced, using mappings methods such as Soundex, Metaphone, Double Metaphone. Such mappings may be language or context dependent.

Format conversions are those where format conversions are applied to data fields, for example conversions between particular date or numeric formats.

Temporal substitutions are those methods where a date or time field is replaced with other forms of algorithmic reference based on some particular reference, for instance this may be the conversion of a date and time field into a field representing the Julian day or a time represented in seconds from an epoch. Temporal substitutions may also pick elements from a time field, for instance the hour of the day.

Other deterministic methods such as re-calculation of values based on the content of fields.

Substring methods consider the truncation and extraction of characters within fields, for example to extract particular digits or characters (e.g. extraction of the first 4 digits of a numeric code). Such methods also consider the parsing and identification of free text fields to extract particular strings (string matching and text extraction methods).

Field lookup and substitution based on secondary keys considers the instance where the presence of fields may not be guaranteed in an input record and where substitution is required so the resultant data record will be correctly populated. In this instance fields may be substituted based on a lookup that considers a secondary field or key. For example, an input record may be expected to contain the zip code for a participant associated with the transaction. In some instances this field may be poorly, erroneously or infrequently populated but the participant identifier itself may be guaranteed to appear in the input record. The zip code can therefore be looked up based on the participant identifier using a reference table populated from a secondary data stream. Dependent on application, such look up methods may only be applied when such fields are blank or erroneously populated. Similar substitution methods can be applied to populate other fields into the data record.

Considering now the processing of data records in order to create profile records. When data records have been created by Profile engine 100 and are candidates for the generation of profile records Control 110 creates one or more tasks to process the data records to generate resultant profile records.

A task to perform profiling must define the type of statistical or mathematical manipulation to be performed and the feature 410 or group of features to generate, where these features are present in the data records to be processed. Control 110 populates profile tasks based on a defined configuration. This configuration is retrieved from Data Store 160 through Data Access 150. By recording and checking progress with Reporter 180, Control 110 can understand work previously performed and identify new records that require processing.

In accordance with the present disclosure, Control 110 creates a number of tasks that each consider a number of features 410 to be profiled. Control 110 may perform a test to identify the combination of these features present in the data records, stored in Data Store 160, to be profiled. In this way multiple tasks are created each to deal with multiple features to be profiled. These tasks are then passed to Task Engine 170 for processing.

Depending on the profiling being performed and the environment of operation the third implementation is likely to be preferable to the first or second approaches detailed above. It is generally more efficient for profiling to be performed on multiple features at a time rather than against single features and therefore the third approach is preferable to the first approach. For instance, this would be the case if the computational time to perform a profile calculation is significantly less than the time required to retrieve data records to be processed. At the other extreme, computational limitations (such as memory or disk resource) will create a limit on the maximum number of features that can be singly considered for profiling by the statistics engine. Hence approach three is also advantageous over approach two.

When implementing the third of these approaches Control 110 must select and group features for profiling. This is done through the use of partition keys.

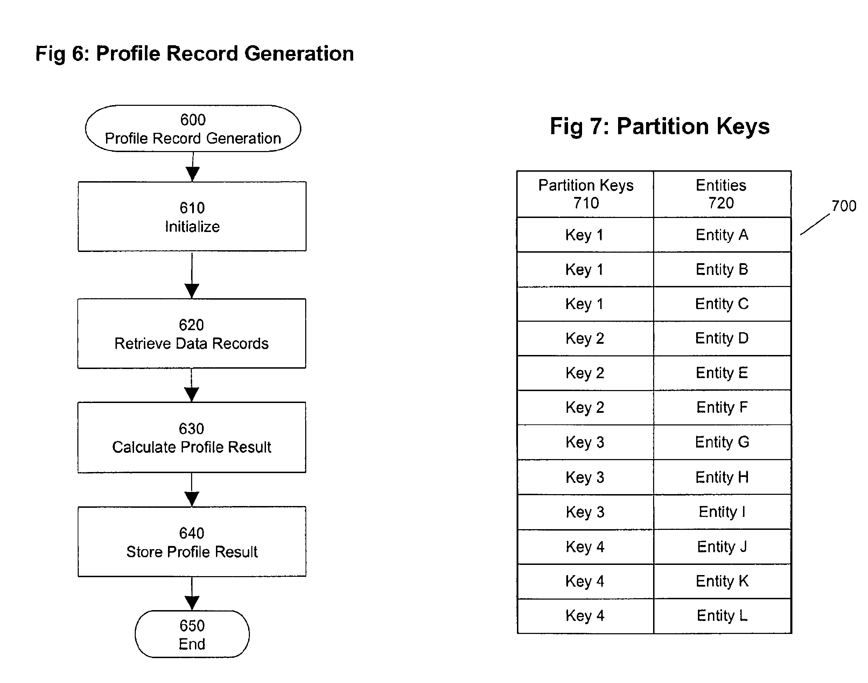

FIG. 7 demonstrates the use and association of partition keys to entities. Partition Key Association 700 is stored and used by Control 110 in order to segment the profile work to be performed across groups of features to be profiled. Partition Key Association 700 associates a particular subset of fields from a feature field group 410 associated with a profile record to particular Partition Keys 710. In this instance the association is between Entities 720 and Partition Keys 710. In this example Entity A, Entity B and Entity C are all associated with Key 1, Entity D is associated with Key2, Entity G is associated with Key3 and so on and so forth. Partition key association of this form may be applied to any fields associated with the field group 410 of the profile record to be derived. Partition key association may be applied to entities, groups of entities or any combination of fields present in the feature the feature field group 410 of the profile records to be created. Different partition key associations may be applied for different profile creation tasks.

It is possible that partition keys, or equivalents, can be derived formulaically from entities, fields or features to be profiled. For instance, on a modulus or other basis. It is therefore not necessary to store such mappings. The use of Partition Key Association 700 has benefits in that Control 110 may change the associations between partition keys and entities, or features. This allows Control 110 to optimize the performance of processing.

When identifying features to be associated with a task for profiling purposes Control 110 groups features according to the Partition Key Association 700. All features associated with a particular entity associated with a key in this mapping are grouped into the same task for processing as a single group. A task will be created for each Partition Key 710 present in the Partition Key Association 700 and therefore the total tasks created will be the same as the distinct number of Partition Keys 710 present. It will be recognized that the number of keys and the association of keys to the entities or features to be profiled will change the amount of work to be performed in each task and the speed of operation of each individual task and the total performance of Profile engine 100.

Optimization methods can be applied to derive the optimum configuration of the Partition Key Association 700 for a particular profiling operation.

Once profile tasks have been created by Control 110 they are passed to Task Engine 170 for processing. The profiling process associated with the processing of these tasks is described in FIG. 6.

FIG. 6 is a flowchart of a method 600 for creating one or more profile records (a profile result) from one or more data records 302. Method 600 is performed for each profiling task to be performed.

Method 600 starts by entering step 610.

In step 610, Statistics Engine 130 is initialized to define the type of profiling to be performed. Details of the feature (or group of features) to be profiled are associated with the task being processed. System configuration details that define the type of profiling are stored in Data Store 160, more specifically File Store 162. The configuration is retrieved by making a request to Data Access 150.

Statistics Engine 130 can be configured to perform any form of data aggregation or mathematical transformation of data. In an exemplary embodiment Statistics Engine 130 would perform data aggregation through the use of database queries using SQL (Structured Query Language), but other methods are also possible.

Once Statistics Engine 130 has been initialized method 600 advances from step 610 to 620.

In step 620 Statistics Engine 130 makes a request to Data Access 150 to retrieve all of the data records identified by the current feature (or group of features) being profiled. Where multiple features are considered by the statistics engine then data is retrieved for all features. Data Access 150 collects the data records corresponding to these features from Data Store 110 and returns them to Statistics Engine 130. From step 620 method 600 advances to step 630.

In step 630 Statistics Engine 130 performs an aggregation or other mathematical manipulation on the data records being processed and generates resultant profile records. In general a single profile record will be generated for each feature being processed but in some configurations the processing may generate multiple profile records. From step 630 method 600 advances to step 640.

In step 640 Statistics Engine 130 passes the resultant profile records to Data Access 150 for storage in Data Store 160, more specifically in Profile Store 168. From step 640 method 600 advances to step 650.

In step 650 method 600 ends.

It will be recognized by one skilled in the art that steps 620, 630 and 640 of method 600 can be performed in SQL insert or update statements. It will also be recognized that the efficiency of profile generation associated with method 600 is dependent on the number of features to be profiled and the number of data records to be processed. Such efficiency is dependent on the number of features profiled in a single step and largely independent of the implementation approach. The selection of features is therefore a critical determining factor of overall system performance.

Control 110 can perform a number of different allocation strategies for the optimization of Partition Key Association 700.

Control 110 can perform the association based on a deterministic calculation against the entity, or feature, being mapped. For instance a modulus of the entity can be taken. Such methods allow Control 110 to create a known number of partition keys in the table with the number of entities associated with each key dependent on the nature of the deterministic calculation.

Control 110 may perform the association based on creating equal numbers of features, or entities, for each Partition Key. This is the approach illustrated in FIG. 7.

Control 110 may also allocate the Partition Key Association 700 based on recorded measures of previous task and operational performance. Reporter 180 records details associated with the execution of tasks. This information can then itself be profiled by the system and used to inform decisions associated with selection of a Partition Key Association 700 for a particular profile operation. Based on a starting set, optimization methods can be used to re-allocate the Partition Key Association 700 in order for runtime performance (or other characteristics such as memory usage) to be balanced between tasks such that overall performance of the system is optimal. For instance, a feature associated with a long running task may be re-allocated to a task which performs very quickly in order to balance the performance.

Control 110 may also reduce or increase the absolute number of partition keys in order to improve performance. Control 110 may also change the number of simultaneously executed tasks to control processor load and improve system performance as part of this optimization.

Control 110 may also consider other aspects of task execution as part of its optimization. For instance to limit the amount of memory used by each task or to limit the chance of task failure. Control 110 may also change the priority and order of task execution or consider any other aspect of the operation of Profile engine 100 in order to improve performance.

Since Profile engine 100 generates profile characterizations of data it can also use this information to improve performance. Specific data characteristics and data distributions associated with features of profiles directly affect the amount of work to be performed in each task and therefore the runtime performance of the system. A simple example of this occurs where the task performance is directly dependent on the number of data records to be processed for each feature to be profiled. In this instance it is desirable to build Partition Key Association 700 in order to balance the number of data records to be profiled across each entity or feature to be profiled. This reduces the possibility that one task may process a large number of data records and a different task may process very few.

In this way Control 110 may consider derived statistics associated with profile records in order to change Partition Key Association 700 in order to improve repeat execution of future profile operations.

It will be recognized that since profiles are created for different features and across different time periods Control 110 may use such predictive knowledge associated with derived statistics in previously generated profiles to dynamically change the Partition Key Association 700 based on input record delivery time periods or other aspects of the operational environment. Control 110 may also change other elements associated with the operating environment, such as the number of processing threads, in order to best match system performance to the delivery of input records based on time periods or other aspects.

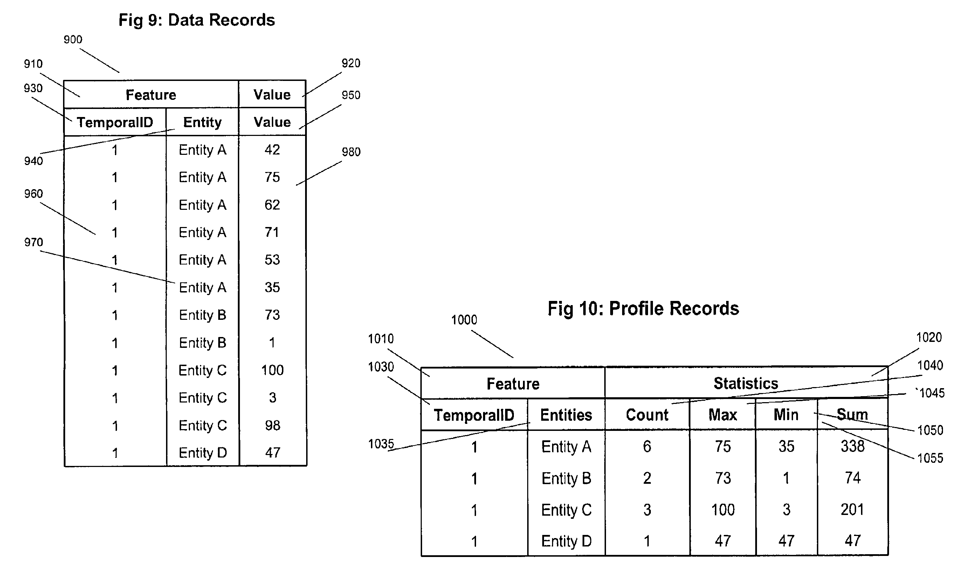

FIG. 9 is a block diagram showing sample Data Records 900 of the form shown in FIG. 3. The data records in FIG. 9 comprise feature 910 and value 920 field groups equivalent to the feature 302 and value 304 field groups shown in FIG. 3. In this instance the feature field group 910 comprises only a Temporal ID 930 and Entity 940. The value field group 920 comprises only a Value 950. FIG. 9 shows multiple data records for different entities 970 across a particular time period, Temporal ID 960.

FIG. 10 is a block diagram showing Profile Records 1000 of the form shown in FIG. 4. The profile records in FIG. 10 comprise feature 1010 and statistics 1020 field groups equivalent to the feature 410 and statistics 420 field groups shown in FIG. 4. The example profile records in FIG 10 are derived through simple aggregation of the data records shown in FIG 9. For example, the count field 1040 provides a count of the number of data records present for a particular feature combination of entity and temporal ID, the max field 1045 presents the maximum value found, the min field 1050 presents the minimum value found and the sum field 1055 presents the sum of all data records for a feature combination.

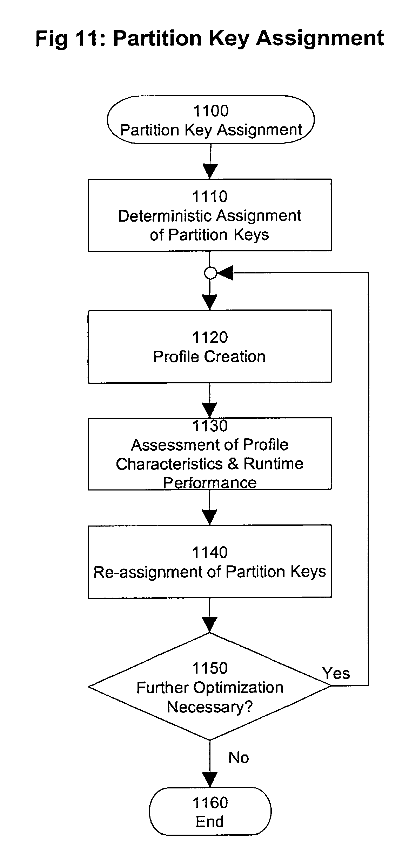

FIG. 11 is a flowchart of a method 1100 for assigning partition keys to profile features. Method 1100 is performed for each profile set to be created by the system.

Method 1100 starts by entering step 1110.

In step 1110 partition keys are assigned in a deterministic manner. Such allocation is necessary before system profiles have first been built and where no profile characteristics or runtime performance data exists in order to better allocate the partition key assignment. The number of partition keys and the approach to allocation will be dependent on the profiling task to be performed.

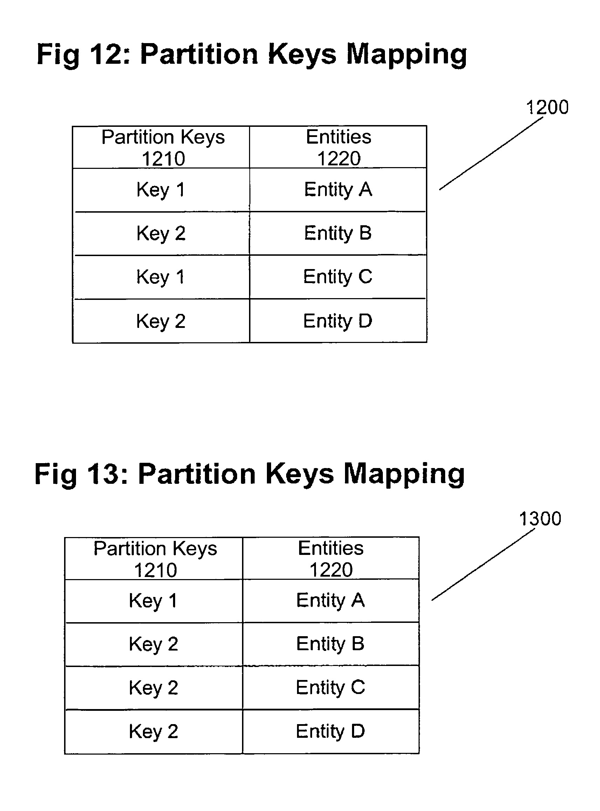

Considering the simple example data in FIG. 9 and FIG. 10, this step might allocate two partition keys with an association between Entity A and Entity C and partition Key 1 and an association between Entity B and Entity D and partition Key 2. Creating the mapping shown in FIG 12.

Once the initial partition key mapping has been performed method 1100 advances from step 1110 to 1120.

In step 1120, Profile Engine 100 builds all profiles associated with the input data records as described previously and considering the process described in FIG. 6.

Considering the simple example data in FIG. 9 and FIG. 10 and the partition key mapping of FIG. 12, two tasks will be created one for each of the partition keys and for the features present in the input data records in FIG 9. These tasks would then be processed by Task Engine 170 and profile records generated by Statistics Engine 130.

From step 1120, method 1100 advances to step 1130.

In step 1130, Control 110 considers profile record data and runtime performance data in order to determine a more efficient allocation of the partition keys. Such allocation may consider numerous factors as described previously.

Considering the simple example data in FIG. 9 and FIG. 10, Control 110 may consider the number of input records as an indicator for a more efficient allocation of partition keys and therefore attempt to balance the count 1040 of input data records across the tasks to be created. Such an allocation across two partition keys would result in the partition key allocation shown in FIG 13. It will be recognized by one skilled in the art that the derived profile statistics maintain information that may be applied in different ways and in different combinations that would allow other statistical features to be considered as part of this optimization and re-allocation. It will also be recognized that profiles considering data characteristics built across longer time frames and derived profiles of statistics may be used to provide better partition key assignments that are more stable in their characteristics and provide a more optimal allocation of processor resource.

From step 1130, method 1100 advances to step 1140.

In step 1140, the new partition key assignment is stored in Map Store 166 for future application during the application of the specific profiling task.

From step 140, method 1100 advances to step 1150.

In step 1150 a decision is made as to whether further optimization of the allocation of partition keys is necessary. It will be recognized that as data characteristics change over time it may be advantageous to re-assess the performance of the partition key mapping. Such re-allocation may be re-performed each time a profile is updated, occasionally or at a frequency defined by Control 110 using details from the characteristics of the profile data. For instance, Control 110 may consider the variance of profile statistics information over time in order to determine the partition key re-allocation frequency.

If further optimization is necessary then method 1100 moves from step 1150 to 1120. If further optimization is not necessary then method 1100 moves from step 1150 to step 1160.

In step 1160, method 1100 ends.

As will be appreciated from the above description, with reference to Figs 11 to 13 at least, the Profile Engine 100 includes a feedback loop which feeds back derived statistics from previously generated profiles to the Control 110. The Control 110 utilizes this feedback to change the Partition Key Association 700, and thereby to optimize the processing of future tasks. This arrangement enables the Profile Engine 100 to ensure that all processors/threads, for example, within it are as fully employed as possible, i.e. they are active for as much of the time as possible and are carrying out similar amounts of work. This has not been possible to date. Without the optimization of the described system, it is necessary to have complete knowledge of the data that is input to a system in order to partition that data in such a way as to achieve "full employment". Further, such partitioning may take longer than the profiling that it precedes, rendering it non-viable. Finally, with the system described, it is possible to commence profiling on a sub-set of the entire data set, and to optimize the profiling as the remainder of the data set is profiled, thereby achieving processing efficiencies on the that would not be possible where partitioning must be carried out with knowledge of the entire data set.

While we have shown and described several embodiments in accordance with our invention, it is to be clearly understood that the same may be susceptible to numerous changes apparent to one skilled in the art. Therefore, we do not wish to be limited to the details shown and described but intend to show all changes and modifications that come within the scope of the appended claims.

## Claims

1. A system for profile record generation of input records, said system comprising:
a record processor which converts said input records into a data records suitable for said profile record generation; and
a statistics engine for the generation of profile records based on said data records.

2. The system according to claim 1, wherein said data records each comprise at least one data field group selected from the group consisting of: data record feature field group, data record value field group and data record reference field group.

3. The system according to claim 2, wherein said profile record is produced by said statistics engine based on aggregation or other statistical processing of said data record value fields for a particular data record feature fields present in a plurality of said data records.

4. The system according to claim 3, wherein each said profile record comprises a profile record feature field group and a profile record statistics field group.

5. The system according to claim 4, further comprising a controller that creates a number of tasks that each consider a number of said profile record feature field groups to be profiled.

6. The system according to claim 5, wherein said controller selects and groups said profile record features for profiling via the use of partition keys, wherein the association of said partition keys to entities or said data record feature field group to be profiled will change the amount of work to be performed in each said task and the speed of operation of each said task, whereby the performance of said system is enhanced.

7. The system according to claim 6, wherein said controller performs said association of said partition keys based on a deterministic calculation against said entity or data record feature field group being mapped.

8. The system according to claim 6, wherein said controller performs said association of said partition keys based on creating equal numbers of data record feature field groups or entities for each partition key.

9. The system according to claim 6, wherein said controller performs said association of said partition keys based on recorded measures of previous tasks and operational performance of said system.

10. The system according to claim 6, wherein said controller adjusts the absolute number of said partition keys in order to improve performance of said system.

11. A method generating profile records from input records, said method comprising:
converting said input records into a data records suitable for said profile record generation; and
generating said profile records based on said data records.

12. The method according to claim 11, wherein said data records each comprise at least one data field group selected from the group consisting of: data record feature field group, data record value field group and data record reference field group.

13. The method according to claim 12, wherein said profile record is produced by aggregation or other statistical processing of said data record value fields for a particular data record feature fields present in a plurality of said data records.

14. The method according to claim 13, wherein each said profile record comprises a profile record feature field group and a profile record statistics field group.

15. The method according to claim 14, further comprising a step of creating a number of tasks that each consider a number of said profile record feature field groups to be profiled.

16. The method according to claim 15, wherein said step of creating selects and groups said profile record features for profiling via the use of partition keys, wherein the association of said partition keys to entities or said data record feature field group to be profiled will change the amount of work to be performed in each said task and the speed of operation of each said task, whereby the performance of said system is enhanced.

17. The method according to claim 16, wherein said step of creating performs said association of said partition keys based on a deterministic calculation against said entity or data record feature field group being mapped.

18. The method according to claim 16, wherein said step of creating performs said association of said partition keys based on creating equal numbers of data record feature field groups or entities for each partition key.

19. The method according to claim 16, wherein said step of creating performs said association of said partition keys based on recorded measures of previous tasks and operational performance of said system.

20. The method according to claim 16, wherein said step of creating adjusts the absolute number of said partition keys in order to improve performance of said system.

21. A task control method that sub-divides the aggregations of profile records into units of work that can be individually performed, said method comprising:
partitioning based on a pre-determined partitioning key associated with entities to be profiled, wherein the association between said partitioning key and said entities being profiled is varied in order to optimize the profiling performance.

22. The method according to claim 21, wherein the variation of the association between said entities being profiled and said partitioning key is controlled based on previously calculated aggregate profile statistics.

23. The method according to claim 21, wherein the variation of the association between said entities being profiled and said partitioning key is controlled based on known runtime performance.

24. The method according to claim 21, wherein the variation of the association between said entities being profiled and said partitioning key is controlled based on a combination of runtime performance and the on previously calculated aggregate profile statistics.
